Europäisches Patentamt

European Patent Office

Office européen des brevets

(11) Publication number: **0 183 344**

**B1**

(12) **EUROPEAN PATENT SPECIFICATION**

(45) Date of publication of patent specification: **07.03.90**

(51) Int. Cl.⁵: **B 29 C 41/22** // B29L31:30

(21) Application number: **85306310.5**

(22) Date of filing: **05.09.85**

(54) Method and apparatus for moulding coloured plastic shells and joining them together with a narrow strip of a matching colour.

(30) Priority: **20.09.84 US 652379**

(43) Date of publication of application:
**04.06.86 Bulletin 86/23**

(45) Publication of the grant of the patent:
**07.03.90 Bulletin 90/10**

(84) Designated Contracting States:
**DE FR GB IT**

(56) References cited:
**FR-A-2 402 523**
**GB-A- 968 760**
**GB-A-1 159 327**

(73) Proprietor: **EX-CELL-O CORPORATION**
**2855 Coolidge Highway**
**Troy Michigan 48084 (US)**

(72) Inventor: **Gray, John D.**
**Middleton Road**
**Durham New Hampshire 03855 (US)**

(74) Representative: **Hartley, David et al**
**Withers & Rogers 4 Dyer's Buildings Holborn**
**London, EC1N 2JT (GB)**

Courier Press, Leamington Spa, England.

## Description

This invention pertains to a moulded multi-colour plastic shell and a process and apparatus for making such articles especially suitable for use in automobile trim components such as interior door or instrument panels and more particularly to two (or more)-tone plastic shells, the plastic powder being processed to form shells having two or more tone colours with a pin-stripe or matching colour connecting the colour sections at a bond joint.

The automotive industry has turned to the use of interior trim components such as door panels comprising a polyvinyl chloride shell. See, for example, the trim components disclosed in U.S. Patent No. 3,123,403. The acceptance of such components has been because *inter alia* this type of construction permits a wide latitude in styling and colour, and grain effects which are most desired particularly in the interior design of automobiles.

The current state of the art includes a preformed grained vinyl shell made from dry thermoplastic powder particles which are applied to a heated shell mould from a powder box to form a continuous monochromatic one-piece shell.

In order to enhance the interior decor of an automobile, interior door panels and other parts have been prepared which include two separate plastic shell sections.

The use of multi-colour plastic is also known in the manufacture of coloured filaments. Such manufacture includes use of a compartmented spinning head for making two-coloured yarn as disclosed in USPN 3,049,397 issued 14th August 1986 for Process of Making Spaced-Dyed Yarn.

GB—A—968,760 discloses a process wherein a mould is masked and then sprayed with polyvinyl chloride plastisol of a first selected colour to form a first gel layer on the mould. The mask is removed and a second layer of such material of another selected colour is applied to form a continuous skin having a two layered segment and a single layer segment. The material deposited on the masking material is wasted. Also wasted is the second layer of material which backs the initially deposited layer.

US—A—3,028,283 discloses a golf grip of multi-colour strips with a separating beam simulating a paint stripe.

Apparatus and method for multiple coloured thermoplastic floor materials are set forth in US—A—3,383,442.

The aforesaid methods and apparatus for manufacture of or resultant manufacture do not enable manufacture of a single-piece shell suitable for use as an interior panel component of an automobile with a pin-stripe or overlapping colour component connector for bonding two or more shell sections.

According to the present invention a process for moulding a single-piece multi-colour plastic shell comprises the steps of:

1) heating an open-ended mould to a temperature near the fusing temperature of a powder thermoplastic material;

2) connecting powder charge box means to the mould to form a closed system with at least two colour power sources;

3) sealing an interior portion of the charge box means to a mould seal having a division surface thereon to separate a preheated mould into first and second colour casting surfaces and to shield the division surface;

4) thereafter rotating the charge box means and mould in a powder casting sequence for releasing powder charges (A, B) of a separate colour onto each of the casting surfaces to build up separate shell segments of desired shape and size;

5) separating the mould and powder charge box means to expose the division surface; and

6) distributing a powder charge against the exposed division surface to form a pin-stripe or common colour connector to bond the plastic cast on the first and second colour casting surfaces.

Also according to the present invention we propose apparatus for moulding a thin-walled plastic shell in a heated open-ended mould from a charge of thermoplastic powder material in open-ended charge box means comprising: means for joining a heated mould and charge box means in open-ended relationship; co-acting means on the box means and the heated mould to define at least two separate casting surfaces on the mould, means for rotating the mould and charge box means so as to distribute two charges (A, B) of different colour against the separate casting surfaces of the mould; connector formation means including a division surface on the mould and a divider on the box means joined to shield the division surface as material is distributed on the casting surfaces; means for exposing the division surface and distributing thermoplastic powder thereon between the material on the separate casting surfaces to form a connector to bond first and second coloured segments at a style line.

In the preferred embodiment, an open-ended charge box means has a divider means to form two or more separate compartments; each of which is filled with a predetermined quantity of different colour powder. The loaded open-ended charge box means is clamped to an open-ended mould with a net condition seal to form a closed system. The mould's net condition seal cooperates with the divider means to separate the powder content in each compartment of the charge box means. The closed system is rotated so that the charge box releases the powder from the separate charge box compartments to flow evenly across the open end of the mould by gravity and against the seal so as to produce a multi-piece shell across heated surfaces of the mould. Thereafter the tooling is rotated and the powder box is removed. The mould is rotated to face upwardly and joint powder is distributed against an exposed heated surface of the mould to form a pin-stripe or common colour connector that bonds the previously cast multi-pieces to form distinct colours in a single-piece article with an internal pin-stripe of a complementary or common colour to the joined segments.

The invention also includes a one-piece integrally cast plastic shell comprising a first shell segment formed from cured plastic powder of a first colour, a second shell segment formed from cured plastic powder of a second colour; a pin-stripe or common colour connector of cured powder plastic integrally joined to inboard shell edges for defining a recessed pin-stripe or common colour transition between first and second panels of different colour defined by the first and second shell segments. The shell may be backed with a layer of reaction injection mould material or reinforced reaction injection mould material of urethane composition.

An embodiment of the invention will now be described by way of example, with reference to the production of plastic thin-walled shells for a typical automotive part such as an interior door panel, consoles and instrument panels, and to accompanying drawings, in which:

Figure 1 is a schematic view of a single-piece multi-color panel shown with associated component parts of an automotive vehicle door panel;

Figure 2 is an enlarged fragmentary sectional view of a pin-stripe or common colour connector in the panel of Figure 1;

Figure 3 is a diagrammatic sectional view of a mould component;

Figure 4 is a diagrammatic sectional view of a powder box sealed to the mould of Figure 3 in a pre-released position;

Figure 5 is a sectional view like Figure 4 showing the powder box and mould in a powder release orientation;

Figure 6 is a diagrammatic sectional view of the mould with separately formed shell segments;

Figure 7 is a view showing distribution of pin-stripe or common colour material; and

Figure 8 is a diagrammatic sectional view of the mould with the pin-stripe or common colour connector formed thereon.

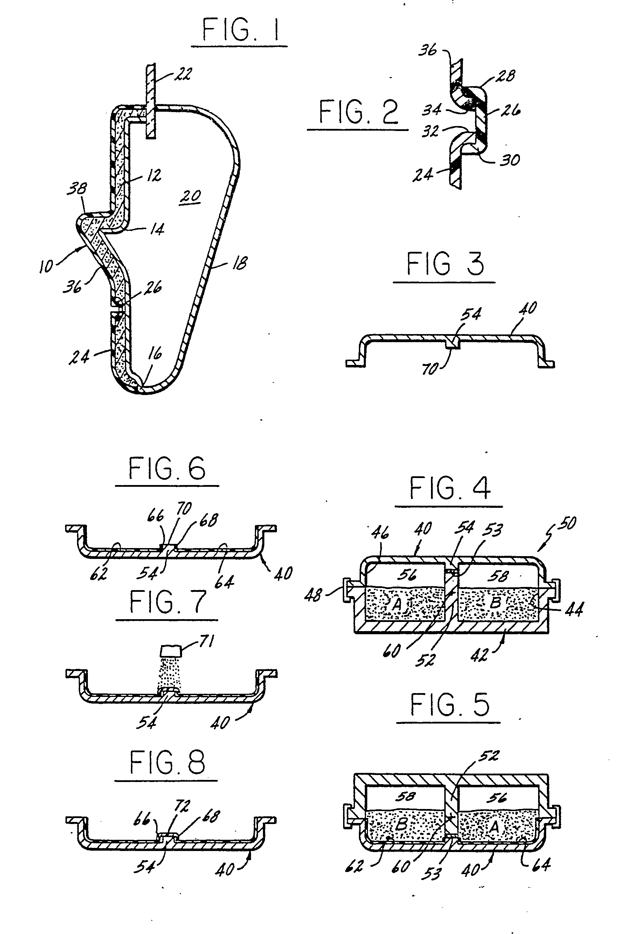

Figure 1 shows a typical automobile door panel application of the multi-colour, single-piece interior plastic shell 10. The shell 10, preferably made of polyvinyl chloride material, is backed by a layer of polyurethane foam 12 bonded to the shell 10 by moulding such as in US—A—3,123,403 which relates to an Automobile Arm Rest. An interior reinforcing insert 14 is connected at a joint 16 to an outer door shell 18 to form an interior space 20 for window lift mechanism (not illustrated) to raise and lower a window 22.

The shell is a one-piece plastic part with an integral lower panel 24 of a drycast plastic having a first colour. As best seen in Figure 2, the shell 10 includes a pin-stripe or common colour connector 26 of a selected connector colour that has edges 28 and 30 that overlap and are bonded to an edge 32 of the lower panel 24 and a side edge 34 of an upper panel 36 including an armrest segment 38 formed of drycast plastic having a second colour contrasting or complementing the colour of the lower panel 24 or other interior components. For example, the upper panel can be red, blue, yellow or beige to contrast with or complement the interior colour of the seats, headliners, crashpads and the like. The lower panel 24 can be of a deeper complementary tone colour and have low impact or scuff display properties. The pin-stripe connector can be a colour complementary to the colour of the lower panel 24 and the upper panel 36 or the same colour as either of the panels.

Referring to Figures 2—4, powder moulding process line is schematically shown as including selectively heated mould 40. A powder box 42 is operated between raised and lowered positions with respect to the mould 40 by suitable handling equipment

The box 42 further includes an upper open end 44 which is configured to cover the planar extent of an opening 46 to mould 40.

Clamp means 48 join and seal the powder charge box 42 to mould 40 when the box 40 is elevated to the position shown in Figure 4, hereinafter referred to as the "mould-inverted" position in which the mould cavity faces downwardly.

As joined, the interior of box 42 and the interior of mould 40 form a closed system 50 having separate powder charges in the box 42, which has a divider 52 with a seal 53 and the mould 40 has a rib 54 that contacts the seal 53 when the box and mould are joined.

The divider 52 and rib 54 form two separate compartments, 56, 58 each containing a charge of plastic powder material of a different colour (colour A in 56, colour B in 58).

The next process step includes concurrent rotation of the closed system 50 about axis 60.

At Figure 5 a dump step takes place in which thermoplastic powder is distributed evenly throughout the mould opening 40. A resultant even buildup of plastic powder occurs on pre-heated surfaces 62, 64 of the mould 40. The inverted mould position shown in Figure 5 will hereinafter be referred to as the "mould-casting" position.

Following the fill step, the joined mould 40 and charge box 42 are again rotated 180° so that the mould 40 is located vertically above the box 42 in the mould-inverted position.

The charge box is removed from the inverted mould 40 and the box 42 is returned to a powder make-up position. The two separate thin wall parts are now visible.

Thereafter the mould 40 (with the powder cast to the surfaces 62, 64) is rotated 180° into the mould-casting position shown in Figure 6.

The Figure 6 position represents a pin-stripe or common colour connector formation station. At this point in the process edges 66, 68 are separated by an exposed division surface 70 on the rib 54. The surface 70 is heated and is disposed to have a charge of plastic powder connector material distributed by suitable distributor means 71 along its length. The connector materials also flow on to the backside surface of edges 66, 68 to form a U-shaped pin-stripe connector 72 that bonds the separate parts of different colour at a common joint formed by connector 72 and edges 66, 68.

The moulded and bonded part is then oven cured; the mould is cooled and the part removed.

A typical powder casting process for a two-colour door panel includes the following sequence.

1. Preheat tool
2. After mould cast temperature is reached, attach the powder box to the mould
3. Rotate box and mould
4. Dwell period
5. Unclamp
6. Distribute pin-stripe or common colour material against exposed, heated seal surface.
7. Return the mould to a cure oven and fuse.

Examples of suitable mould heating processes include mould temperature control by heated and cooled air or oil heating and cooling flow as set forth in U.S.—A—4,217,325. Suitable thermoplastic powders include plasticized polyvinyl chlorides and related vinyl resins in dry powder form for ease of gravity flow from the powder charge box 60 during both fill and return steps. Typical examples of parts, plastic materials and mould processes include the following:

Examples of parts that have been made by the PVC powder moulding process include a door panel shell having a mould volume of approximately six (6) cubic feet (0.17 cu. metres).

PVC resin, plasticizer, stabiliser, release agents and colour pigments are combined in a high intensity mixer to produce a dry, flowable powder of each desired colour. The process is known in the industry as dry-blending.

The various compond components may be selected as to type and ratio to provide the properties required both for the finished product and for ease of processing. Physical properties will not be too dissimilar from those obtained with liquid plastisol which is also used to manufacture similar products but has an inherent weakness for forming objectionable drips and runs when made in complex shapes.

Processing properties are such that when melting of the plastic powder occurs, densification results in exact reproduction of minute detail such as grain marks and stitches engraved in the mould surface.

The mould preheating temperature may range from 250°F (112.5°C) to 450°F (232.5°C). Since the thickness of the finished product is also governed by the time the powder contact the mould, it should be understood that simultaneous charging of the powder to the mould can be of definite advantage. Also, if certain areas of the mould can be made to have a lower pre-heated temperature than others, it will permit moulding a thinner shell in those areas, since both temperature and mould-filled time determine the final thickness of the shell. Therefore, a very flexible range, for mould-filled time, of one second to ten seconds or more has been established.

Depending on formulation, complete melting or fusion of the PVC powder can occur when mould temperatures reach 350°F (176.5°C) to 450°F (232.5°C).

After fusion, the mould is cooled to a temperature which will facilitate removal of the shell without damage.

Specifically, the process and apparatus of the present invention enable even and complete distribution of thermoplastic powder material onto mould surfaces to form large, long, thin-walled single-piece two-colour or more shells with a pin-stripe or common colour connector bonded to each shell segment for forming a unitary part for interior door panels or instrument panels and the like formed during short mould cycles in limited plant floor space.

## Claims

1. A process for moulding a single-piece multi-colour plastic shells comprising the steps of:

(1) heating an open-ended mould (40) to a temperature near the fusing temperature of a powder thermoplastic material;

(2) connecting powder charge box means (42) to the mould (40) to form a closed system with at least two colour power sources;

(3) sealing an interior portion (52, 53) of the charge box means (42) to a mould seal having a division surface (70) thereon to separate a pre-heated mould into first (62) and second (64) colour casting surfaces and to shield the division surface (70);

(4) thereafter rotating the charge box means (42) and mould (40) in a powder casting sequence for releasing powder charges (A, B) of a separate colour onto each of the casting surfaces (62, 64) to build up separate shell segments (24, 36) of desired shaped and size;

(5) separating the mould (40) and powder charge box means (42) to expose the division surface (70); and

(6) distributing (71) a powder charge against the exposed division surface (70) to form a pin-stripe or common colour connector (26, 72) to bond the plastic cast on the first and second colour casting surfaces.

2. A process according to claim 1, the flow control step 6 including distributing (71) a powder charge of different colour against the division surface (70) and against backside edges of the separate shell segments (24, 36) to build a joint to integrally connect adjacent cast colour segments along a styling line.

3. Apparatus for moulding a thin-walled plastic shell in a heated open-ended mould (40) from a charge of thermoplastic powder material in open-ended charge box means (42) comprising: means (48) for joining a heated mould (40) and charge box means (42) in open-ended relationship; co-acting means (52, 53, 54) on the box means (42) and the heated mould (40) to define at least two separate casting surfaces (62, 64) on the mould; means for rotating the mould and charge box means so as to distribute two charges (A, B) of different colour against the separate casting surfaces of the mould; connector formation means including a division surface (70) on the mould and a divider (52, 53) on the box means joined to shield the division surface (70) as material is distributed on the casting surfaces (62, 64); means for exposing the division surface and distributing (71) thermoplastic powder thereon between the material on the separate casting surfaces to form a connector (26, 72) to bond first and second coloured segments (24, 36) at a style line.

4. Apparatus according to claim 3, wherein the charge box means (42) includes a single open-end box having at least one partition (52) separating the box into first and second open end compartments (56, 58) each adapted to have a predetermined charge (A, B) of plastic powder of different colour; and the mould (40) has a rib (54) with edge surfaces and a division surface (70) engageable with and completely covered by the partition (52) and seal (53) between the rib and the partition to seal first and second powder casting surfaces (62, 64) on the mould receiving powder from the first and second open end compartments (56, 58) when the box and mould are joined and rotated to form multi-coloured separate shell segments (24, 36) on the mould with edges formed against the rib (54) edge surfaces; the apparatus also comprising means for separating the mould from the charge box to expose the division surface (70) and the backside of the shell segment edges; and means (71) for distributing plastic powder against the division surface (70) and shell segment edges.

5. A one-piece integrally cast plastic shell (10) comprising a first shell segment (24) formed from cured plastic powder of a first colour; a second shell segment (36) formed from cured plastic powder of a second colour; a pin-stripe or common colour connector (26) of cured powder plastic integrally joined to inboard shell edges (32, 34) for defining a recessed pin-stripe or common colour transition between first and second panels of different colour defined by the first and second shell segments (24, 36).

6. A shell according to claim 5 wherein the shell is a door panel shell.

**Patentansprüche**

1. Verfahren zum Formen von einstückigen mehrfarbigen Kunststoffschalen, welches folgende Schritte aufweist:
(1) Erhitzen einer Form (40) mit offenem Ende auf eine Temperatur in der Nähe der Schmelztemperatur eines pulverförmigen thermoplastischen Materials;
(2) Verbinden einer Pulverchargenbehältereinrichtung (42) mit der Form (40) zur Ausbildung eines geschlossenen Systems mit wenigstens zwei Farbpulverquellen;
(3) Siegeln eines Innenraumabschnitts (52, 53) der Chargenbehältereinrichtung (42) an ein Formsiegel, an dem eine Unterteilungsoberfläche (70) vorgesehen ist, um eine vorerwärmte Form in einer erste (62) und eine zweite (64) Farbaufstreuoberfläche zu trennen und um die Unterteilungsoberfläche (70) abzuschirmen;
(4) Anschließendes Drehen der Chargenbehältereinrichtung (42) und der Form (40) in einer Pulveraufstreusequenz, um Pulverchargen (A, B) einer gesonderten Farbe auf jeder der Streuoberflächen (62, 64) freizugeben, um gesonderte Schalensegmente (24, 36) mit gewünschter Form und Größe aufzubauen;
(5) Trennen der Form (40) und der Pulverchargenbehältereinrichtung (42), um die Unterteilungsoberfläche (70) freizulegen; und
(6) Verteilung (71) einer Pulvercharge gegen die freigelegte Unterteilungsoberfläche (70) zur Ausbildung eines Zapfenstreifens oder eines gemeinsamen Farbverbindungsstücks (26, 72) zum Binden des Kunststoffs, der auf die erste und zweite Farbaufstreuoberfläche aufgestreut wurde.

2. Verfahren nach Anspruch 1, bei welchem der Utrémungusteuerschritt (6), das Verteilen (71) einer Pulvercharge mit unterschiedlicher Farbe gegen die Unterteilungsgröberfläche (70) und gegen Rückseitenränder der gesonderten Schalensegmente (24, 36) einschließt, um eine Verbindung aufzubauen, um benachbarte aufgestreute Farbsegmente längs einer Stylinglinien in einem Stück zu verbinden.

3. Vorrichtung zum Formen einer dünnwandigen Kunststoffschale in einer beheizten Form (40) mit offenem Ende aus einer Charge eines thermoplastischen thermoplastische pulverförmigen Materials in einer Chargenbehältereinrichtung (42) mit offenem Ende enthaltend:
Einrichtungen (48) zur Verbindung einer beheizten Form (40) und einer Chargenbehältereinrichtung (42) in einer offenendigen Beziehung; eine zusammenwirkende Einrichtung (52, 53, 54) an der Behältereinrichtung (42) und der beheizten Form (40) zur Bildung von wenigstens zwei getrennten Austreuoberflächen (62, 64) an der Form; eine Einrichtung zum Drehen der Form und der Chargenbehältereinrichtung derart, daß zwei Chargen (A, B) unterschiedlicher Farbe gegen die gesonderten Aufstreuoberflächen der Form verteilt werden; eine Verbindungsstückausbildungseinrichtung, die eine Unterteilungsoberfläche (70) an der Form und einen Teiler (52, 53) an der Behältereinrichtung aufweist, die verbunden sind, um die Unterteilungsoberfläche (70) abzuschirmen, wenn Material auf die Aufstreuoberflächen (62, 64) verteilt wird; eine Einrichtung zum Freisetzen der Unterteilungsoberfläche und zum Verteilen (71) von thermoplastischem Pulver darauf zwischen dem Material auf den gesonderten Aufstreuoberflächen zur Bildung eines Verbindungsstücks (26, 72), um erste und zweite gefärbte Segmente (24, 36) an einer Stylinglinie zu binden.

4. Vorrichtung nach Anspruch 3, bei welcher die Chargenbehältereinrichtung (42) einen einzigen Behälter mit offenem Ende aufweist, der wenigstens eine Trennwand (52) hat, die den Behälter in eine erste und eine zweite Kammer (56, 58) mit offenem Ende trennt, von denen jede dafür geeignet ist, eine vorher festgelegte charge (A, B) eines Kunststoffpulvers unterschiedlicher Farbe zu haben; und bei welcher die Form (40) eine Rippe (54) mit Randoberflächen und einer Unterteilungsoberfläche (70) hat, die mit der Trennwand (52) und einer Siegelung (53) zwischen der Rippe und der Trennwand in Eingriff bringbar ist und vollständig von der Trennwand (52) und der Siegelung (53) abgedeckt ist, um die erste und zweite Pulveraufstreuoberfläche (62, 64) an der Form zu siegeln, welche Pulver von der ersten und der zweiten Kammer (56, 58) mit offenem Ende erhalten, wenn der Behälter und die Form verbunden und gedreht werden, um mehrfarbige gesonderte Schalensegmente (24, 36) an der Form mit Rändern zu bilden, die gegen die Rippen (54)-Randoberflächen gebildet sind; wobei die Vorrichtung ebenfalls eine Einrichtung zum Trennen der Form von dem Chargenbehälter, um die Unterteilungsoberfläche (70) und die Rückseite der Schalensegmentränder freizulegen, und eine Einrichtung (71) aufweist, um Kunststoffpulver gegen die Unterteilungsoberfläche (70) und die Schalensegmentränder zu verteilen.

5. Einstückiges, in einem Teil aufgestreutes Kunststoffteil (10) mit einem ersten Schalensegment (24), das aus gehärtetem Kunststoffpulver einer ersten Farbe gebildet ist, mit einem zweiten Schalensegment (36), das aus gehärtetem Kunststoffpulver einer zweiten Farbe gebildet ist; mit einem Zapfenstreifen oder einem gemeinsamen Farbverbindungsstück (26) aus gehärtetem Pulverkunststoff, der bzw. das in einem Stück mit den innenliegenden Schalenrändern (32, 34) verbunden ist, um einen mit Aussparungen versehenen zapfenstreifen- oder gemeinsamen Farbübergang zwischen ersten und zweiten Feldern unterschiedlicher Farbe zu bilden, die von dem ersten und zweiten Schalensegment (24, 36) gebildet werden.

6. Schale nach Anspruch 5, bei welcher die Schale eine Türfeldschale ist.

**Revendications**

1. Procédé pour le moulage de coquilles en plastique multicolores en une seule pièce comprenant les étapes qui consistent à:
(1) Chauffer un moule à extrémité ouverte (40) à une température voisine de la température de fusion du matériau pulvérulent thermoplastique;
(2) Connecter des moyens formant boîte renfermant une charge de poudre (42) au moule (40) pour former un système fermé avec au moins deux sources de poudre de couleur;
(3) Assurer l'étanchéité entre une partie interne (52, 53) des moyens formant boîte de charge (42) et un joint de moule ayant une surface formant diviseur (70) sur ledit moule pour séparer un moule préchauffé en une première (62) et une seconde (64) surfaces de coulage de couleur et pour protéger la surface format diviseur (70);
(4) Faire tourner ensuite les moyens formant boîte de charge (42) et le moule (40) dans une séquence de coulage de poudre pour libérer des charges de poudre (A, B) de couleurs distinctes vers chacune des surfaces de coulage (62, 64) pour constituer des segments de coquille distincts (24, 36) de la forme et de la dimension désirées;
(5) Séparer le moule (40) et les moyens (42) formant boîte de charge de poudre pour exposer la surface formant diviseur (70); et
(6) Distribuer (71) une charge de poudre contre la surface formant diviseur exposée (70) pour former un filet ou moyen de connexion de couleur commune (26, 72) pour relier la matière plastique coulée sur les première et seconde surfaces de coulage de couleurs.

2. Procédé selon la revendication 1 dans lequel l'étape 6 de contrôle d'écoulement comporte la distribution (71) d'une charge de poudre d'une couleur différente contre la surface formant diviseur (70) et contre les bords dorsaux des segments de coquille distincts (24, 36) pour constituer un joint de façon à solidariser des segments adjacents de couleur coulée selon une ligne formant décoration.

3. Appareil pour mouler une coquille plastique à paroi de faible épaisseur dans un moule à extrémité ouverte chauffé (40) à partir d'une charge de matériau pulvérulent thermoplastique contenue dans des moyens (42) formant boîte de charge à extrémité ouverte comprenant: des moyens (48) pour relier un moule chauffé (40) et des moyens formant boîte de charge (42) par leurs extrémités ouvertes; des moyens coopérants (52, 53, 54) sur les moyens formant boîte (42) et le moule chauffé (40) pour définir au moins deux surfaces de coulage distinctes (62, 64) sur le moule; des moyens pour faire tourner le moule et les moyens formant boîte de charge de façon à distribuer deux charges (A, B) de couleurs différentes contre les surfaces de coulage distinctes du moule; des moyens formant connexion comportant une surface de diviseur (70) sur le moule et un diviseur (52, 53) sur les moyens formant boîte relié de façon à protéger la surface formant diviseur (70) lorsque du matériau est distribué sur les surfaces de coulage (62, 64); des moyens pour exposer la surface formant diviseur et distribuer (71) de la poudre thermoplastique sur cette dernière entre le matériau qui se trouve sur les surfaces de coulage distinctes pour former un moyen de connexion (26, 72), de façon à coller l'un à l'autre les premier et second segments colorés (24, 36) selon une ligne décorative.

4. Appareil selon la revendication 3 dans lequel les moyens formant boîte de charge (42) comportent une boîte unique à extrémité ouverte comportant au moins une cloison (52) qui sépare la boîte en un premier et un second compartiments à extrémité ouverte (56, 58) chacun étant adapté pour recevoir une charge prédéterminée (A, B) de poudre plastique d'une couleur différente; et le moule (40) comporte une nervure (54) avec des surfaces latérales et une surface formant diviseur (70) susceptibles de coopérer avec et totalement recouvertes par la cloison (52) et le joint (53) entre la nervure et la cloison pour assurer l'étanchéité des première et seconde surfaces de coulage de poudre (62, 64) sur le moule recevant la poudre à partir des premier et second compartiments à extrémité ouverte (56, 58) lorsque la boîte et le moule sont reliés et tournent pour constituer des segments de coquille distincts multicolores (24, 36) sur le moule avec des bords formés contre les surfaces des bords de la nervure (54); l'appareil comprenant également des moyens pour séparer le moule de la boîte de charge pour exposer la surface formant diviseur (70) et la partie arrière des bords de segments de coquille; et des moyens (71) pour distribuer de la poudre plastique contre la surface formant diviseur (70) et les bords du segment de coquille.

5. Coquille (10) en matière plastique coulée en une seule pièce comportant un premier segment de coquille (24) formé à partir de poudre de matière plastique cuite d'une première couleur; un second segment de coquille (36) formé à partir d'une poudre plastique cuite d'une seconde couleur; un filet ou liaison d'un couleur commune (26) de matière plastique pulvérulente cuite solidarisée au bord intérieur de la coquille (32, 34) pour définir un filet en creux ou une transition d'une couleur commune entre des premier et second panneaux de différentes couleurs définis par le premier et le second segments de coquille (24, 36).

6. Coquille selon la revendication 5 dans laquelle la coquille est une coquille de panneau de porte.

FIG. 1

FIG. 2

FIG 3

FIG. 6

FIG. 4

FIG. 7

FIG. 5

FIG. 8